# EUROPÄISCHE PATENTANMELDUNG

(11) **EP 4 800 862 A1**
(43) Veröffentlichungstag der Anmeldung: **02.09.2026**
(21) Anmeldenummer: 26159679.5
(22) Anmeldetag: 19.02.2026
(51) Int. Cl.: H02G 3/32

(54) **KABEL-KLAMMER**

(30) Priorität: 27.02.2025 CH 1842025
(71) Anmelder: Kull, Willi, 6330 Cham (CH)
(72) Erfinder: Kull, Willi, 6330 Cham (CH)
(74) Vertreter: Felber, Josef

(57) **Zusammenfassung**

Diese Kabel-Klammer dient zum Bündeln und Zusammenklemmen von Ladekabeln, Netzkabeln, Schnüren, Seilen, Schläuchen, Wollesträngen, Schweissdrähten, Drahtbündeln, Röhrchen oder Trinkhalmen. Sie besteht aus zwei über ein Scharnier (1, 2) miteinander verbundenen, zueinander hin gekrümmten Klammerschenkeln (3, 4), die ineinander schwenkbar sind. Mindestens ein Zugband (5, 6) oder mindestens eine Zugfeder zwischen den Aussenseiten der beiden Klammerschenkel (3, 4) ist so angeordnet, dass das Auf- und Zuschwenken der Klammerschenkel (3, 4) über einen Totpunkt erfolgt. Damit werden die Klammerschenkel (3, 4) sowohl im geöffneten wie auch im ineinander geschwenkten Zustand jenseits des Totpunktes mit Klemmkraft in der jeweiligen Position festgehalten und umschliessen ein eingelegtes Bündel.

## Beschreibung

Die vielen Niedervolt-Ladekabel zu den diversen elektronischen Geräten wie Smartphones, Tablets, i-pods, e-Zigaretten, PCs, Laptops, Kameras, etc. bilden beim Mitführen in einer Tasche oder einem Koffer oftmals Knäuel, die mühsam zu entwirren sind. Auch verschiedene Kabel für Haushaltstrom in Büros für Drucker, Computer, sonstige Bürogeräte oder Ständerlampen bilden oftmals ein Kabelgewirr, das nicht leicht zu entflechten ist und auch unordentlich anzusehen ist.

Die Aufgabe der vorliegenden Erfindung ist, es hierfür Abhilfe zu schaffen und ein einfach und einhändig anwendbares Mittel zu schaffen, damit die Kabel für Reisezwecke je gesondert aufgewickelt sicher und platzsparend aufbewahrt werden können und bei Bedarf sofort und ohne Knäuel einsatzbereit sind. Die vielen nebeneinander verlaufenden Kabel in Büros sollen mit diesem Mittel ebenfalls gebündelt und geordnet miteinander verbunden werden können, um eine ordentlich aufgeräumte Ansicht zu bieten und einer Knäuelbildung vorzubeugen.

Diese Aufgabe wird gelöst von einer Kabel-Klammer, bestehend aus zwei über ein Scharnier miteinander verbundenen zueinander hin gekrümmten Klammerschenkel, die ineinander schwenkbar sind, wobei mindestens ein Zugband oder mindestens eine Zugfeder zwischen den beiden Klammerschenkeln so angeordnet ist, dass das Auf- und Zuschwenken der Klammerschenkel über einen Totpunkt erfolgt, und damit die Klammerschenkel sowohl im geöffneten wie auch im ineinander geschwenkten Zustand jenseits des Totpunktes mit Klemmkraft in der jeweiligen Position festgehalten sind.

Diese Kabel-Klammer wird anhand der Figuren beschrieben und ihre Funktion und Anwendung wird erklärt.

Es zeigt:
- Figur 1:: Die Kabel-Klammer mit zueinander zu einer geschlossenen Ummantelung zusammengeschwenkten Klammerschenkeln;
- Figur 2:: Die Kabel-Klammer mit ganz geöffneten, das heisst auseinander geschwenkten Klammerschenkeln;
- Figur 3:: Die Kabel-Klammer von der Scharnierseite her gesehen mit teilweise zueinander zusammengeschwenkten Klammerschenkeln;
- Figur 4:: Die Kabel-Klammer im Zustand nach Figur 3, aber jetzt von der Aussenseite der Klammerschenkel her gesehen;
- Figur 5:: Die Kabel-Klammer nach dem Zusammenschwenken der Klammerschenkel zu einer geschlossenen Ummantelung;
- Figur 6:: Die Kabel-Klammer mit ganz zusammengeschwenkten Klammerschenkeln;
- Figur 7:: Die Kabel-Klammer angelegt an einem zu Schlaufen aufgewickelten Kabel.

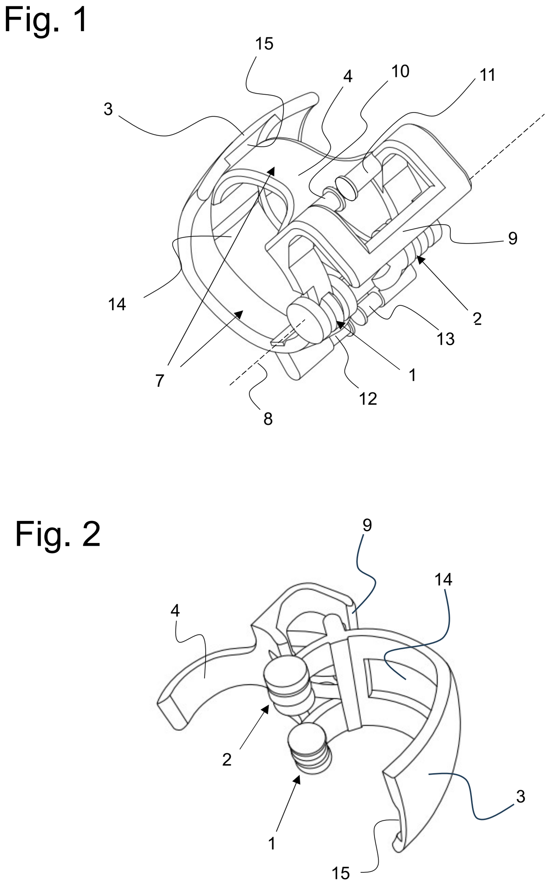

Die Figur 1 zeigt diese Kabel-Klammer zunächst mit halbwegs zusammengeschwenkten Klammerschenkeln 3, 4 das heisst mit zu einer geschlossenen Ummantelung 7 zueinander zusammengeschwenkten Klammerschenkeln 3, 4. Der eine Klammerschenkel 4 ist schmaler ausgeführt, während der breitere Klammerschenkel 3 ab seinem vorderen Ende zunächst eine kanalförmige Vertiefung 15 von der Breite des schmaleren Klammerschenkels 4 ausformt, zur Führung desselben beim Zusammenschwenken, und anschliessend an diese Vertiefung 15 eine Ausnehmung 14 aufweist. Die Scharnierachse 8, um welche die beiden Klammerschenkel 3, 4 schwenkbar sind, ist hier strichliniert eingezeichnet. Am hier rechten Klammerschenkel 4 ist ein Griffbügel 9 angeformt. Durch Ergreifen desselben oder durch Drücken auf diesen Griffbügel 9 in der gewünschten Richtung lässt sich der an ihm angeformte Klammerschenkel 4 gegenüber dem zweiten Klammerschenkel 3 verschwenken. Zwischen dem Griffbügel 9 erkennt man zwei von ihm gegen innen ragende Bolzen 10, 11. Parallel dazu angeordnete Bolzen 12, 13 sind unten erkennbar auf der Aussenseite des zweiten Klammerschenkels 3 angeformt. Zwischen diesen Bolzen, nämlich den beiden Bolzen 10, 12 einerseits und den beiden Bolzen 11, 13 andrerseits, kann je ein Gummizugband angelegt werden, das dann das Auf- und Zuschwenken der Klammerschenkel 3, 4 unterstützt.

Die Figur 2 zeigt die Kabel-Klammer im gänzlich geöffnetem Zustand, das heisst mit ganz auseinander geschwenkten Klammerschenkeln 3, 4. Zwischen diesen liegt das Scharnier, hier gebildet von zwei Scharnieren 1, 2. Der eine Klammerschenkel bildet dazu einen Scharnierbolzen und der andere die zugehörige Scharnierhülse. In diesem Zustand der Kabel-Klammer kann man ein Bündel von Kabeln in das Innere des gekrümmten Klammerschenkels 3 einlegen, wobei die Kabel längs der Scharnierachse 8 eingelegt werden.

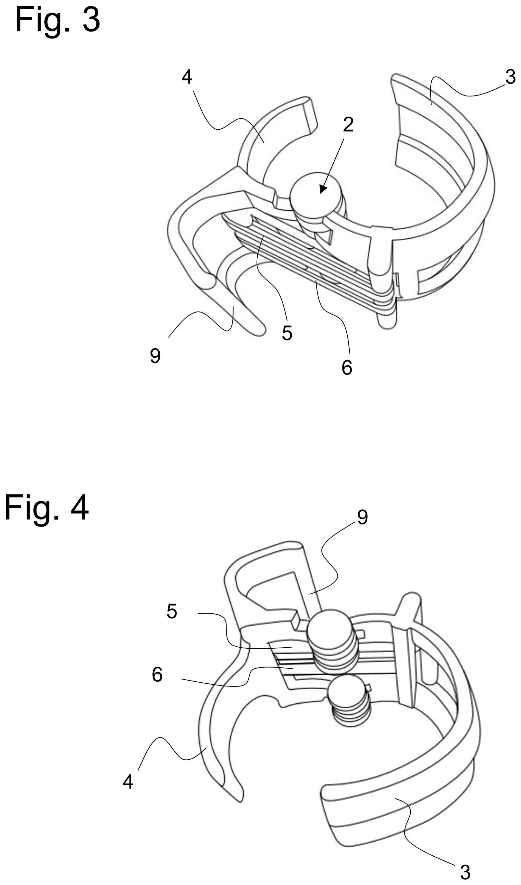

Die Figur 3 zeigt diese Kabel-Klammer von der Scharnierseite her gesehen mit teilweise zueinander zusammengeschwenken Klammerschenkeln 3, 4. In dieser Figur sieht man die beiden Gummi-Zugbänder 5, 6, die zwischen den Bolzen, die zu Figur 2 erwähnt wurden, aufgespannt sind. Im gezeigten Zustand bzw. dieser Aufschwenkposition nähert sich die Aufschwenkung einem Totpunkt, an dem die Zugbänder 5, 6 maximal gespannt sind. An diesem Totpunkt entfalten sie keine Schwenkkraft, weder in Zuschwenkrichtung noch in die Aufschwenkrichtung. Zur besseren Illustration ist diese Schwenkposition der Klammerschenkel in Figur 4 in einer Ansicht von der gegenüberliegenden Seite her gesehen gezeigt, das heisst von der Aussenseite der Klammerschenkel her gesehen.

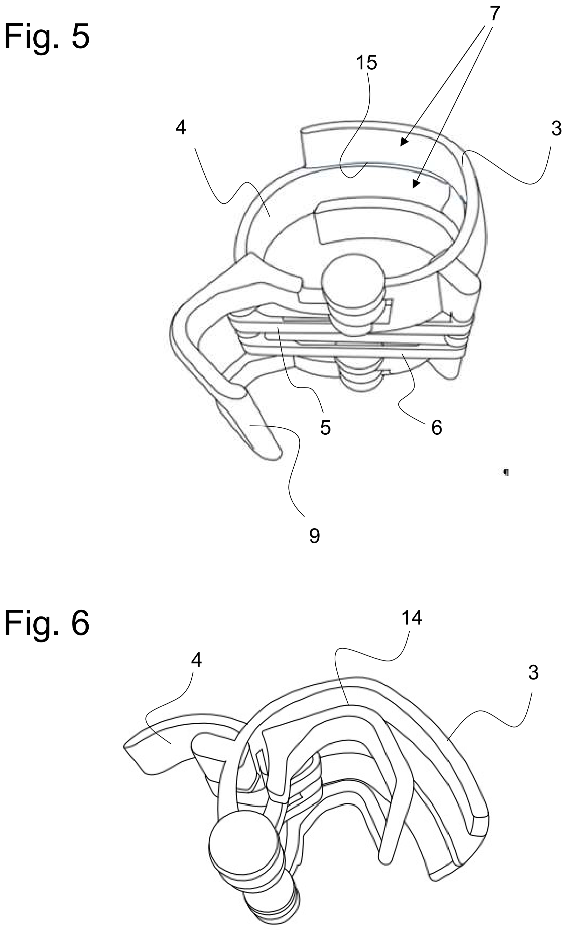

Die Figur 5 zeigt die Kabel-Klammer nach dem Zusammenschwenken der Klammerschenkel 3, 4 zu einer geschlossenen Ummantelung 7. Der schmalere Klammerschenkel 4 schwenkte hier in eine leichte kanalförmige Vertiefung 15 auf der Innenseite des breiteren Klammerschenkels 3 ein, sodass sich die beiden Klammerschenkel 3, 4 hier ein stückweit überlappen und deshalb eine geschlossene Ummantelung 7 bilden. Wenn zuvor ein Kabelbündel in das Innere der Klammerschenkel 3, 4 gelegt wurde, so wird dieses Klammerbündel in diesem zusammengeschwenkten Zustand allseits umschlossen und mit Klemmkraft der Zugbänder 5, 6 festgehalten.

Die Figur 6 zeigt die Kabel-Klammer mit ganz zusammengeschwenkten Klammerschenkeln 3, 4, wenn kein Kabel eingelegt ist, also die Kabel-Klammer ganz leer zugeschwenkt wird. Der schmalere Klammerschenkel 4 schwenkt in diesem Fall durch die Ausnehmung 14 im breiteren Kabel-Schenkel 3 hindurch, bis die gezeigte Position erreicht ist, und in dieser Position stehen die Zugbänder immer noch unter einer gewissen schwachen Zugspannung. Das heisst in diesem ganz zusammengeschwenkten Zustand werden die beiden Klammerschenkel 3, 4 von ihnen festgehalten. Umso mehr Klemmkraft wird von ihnen bei weiter geöffneten Klammerschenkeln 3,4 aufgebracht, wenn also eines oder mehrere Kabel in die Kabel-Klammer eingelegt sind.

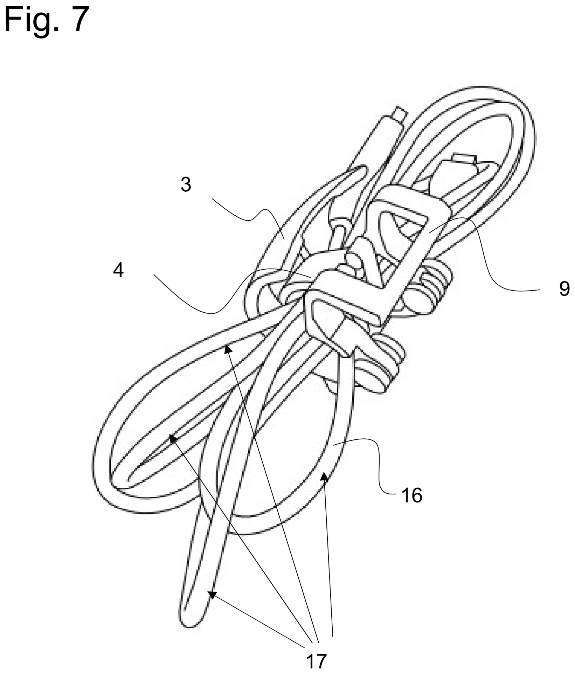

Die Figur 7 zeigt die Kabel-Klammer angelegt an einem zu mehreren Schlaufen 17 aufgewickelten Kabel 16. Wird ein Kabel 16 so in Schlaufen gelegt, so hält man es mit einer Hand auf einer Seite der Schlaufen 17 und kann dann mit der anderen Hand die geöffnete Kabel-Klammer über die Schlaufen 17 legen und durch Druck mit einem Finger auf den Bügel 9 die Klammerschenkel 3, 4 zum Schliessen bringen. Die Kabel-Klammer lässt sich also als Besonderheit ganz einfach auch einhändig bedienen. Man drückt den Klammerschenkel 4 bis über den Totpunkt und dann schwenken die Schenkel 3, 4 von allein kraft der Zugbänder 5, 6 zusammen und umklammern fortan das Schlaufenbündel 17. Ein solches zu Schlaufen 17 zusammengelegtes Kabel 16, zum Beispiel ein Ladekabel, lässt sich dann mit einer solchen Kabel-Klemme zusammengehalten kompakt in einer Tasche oder einem Koffer mitführen. Bei Bedarf kann die Kabel-Klammer rasch entfernt werden und das Kabel liegt ohne Knäuel und ohne Verhaspelungsgefahr zum Einsatz bereit. In gleicher Weise kann es sich auch um ein Bündel von mehreren, parallel zueinander verlaufender Kabel handeln, oder es können Ladekabel, Netzkabel, Schnüre, Seile, Schläuche, Wollestränge, Schweissdrähte, Drahtbündel, Röhrchen oder Trinkhalme oder ähnlich längliche Objekte, zum Beispiel ein Bündel von Farbstiften oder Stricknadeln oder ähnlichen Objekten zusammengehalten werden.

Wenn es gilt, viele am Boden liegende oder auch viele frei hängende Kabel zu ordnen und zu Bündeln zusammenzufassen, so kann an einigen beliebigen Stellen eine solche Kabel-Klammer angelegt werden und man erhält einen geordneten Strang von Kabeln, was einen aufgeräumten Eindruck hinterlässt.

### Ziffernverzeichnis

- 1: Scharnier
- 2: Scharnier
- 3: breiterer Klammerschenkel
- 4: schmalerer Klammerschenkel
- 5: erstes Gummi-Zugband
- 6: zweites Gummi-Zugband
- 7: Ummantelung
- 8: Schwenkachse des Scharniers
- 9: Bügel als Griff
- 10: Erster Bolzen am Klammerschenkel 4
- 11: Zweiter Bolzen am Klammerschenkel 4
- 12: Erster Bolzen am Klammerschenkel 3
- 13: Zweiter Bolzen am Klammerschenkel 3
- 14: Ausnehmung
- 15: kanalförmige Vertiefung
- 16: Kabel
- 17: Schlaufen vom Kabel

## Patentansprüche

1. Kabel-Klammer, bestehend aus zwei über ein Scharnier (1, 2) miteinander verbundenen, zueinander hin gekrümmten Klammerschenkel (3, 4), die ineinander schwenkbar sind, wobei mindestens ein Zugband (5, 6) oder mindestens eine Zugfeder zwischen den beiden Klammerschenkeln (3, 4) so angeordnet ist, dass das Auf- und Zuschwenken der Klammerschenkel (3, 4) über einen Totpunkt erfolgt, und damit die Klammerschenkel (3, 4) sowohl im geöffneten wie auch im ineinander geschwenkten Zustand jenseits des Totpunktes mit Klemmkraft in der jeweiligen Position festgehalten sind.

2. Kabel-Klammer nach Anspruch 1, **dadurch gekennzeichnet, dass** sie aus zwei einstückig geformten Klemmschenkeln (3, 4) besteht, die gänzlich aus Kunststoff hergestellt sind und das Zugband zwischen den beiden Klemmschenkeln (3, 4) von zwei Zugbändern (5, 6) gebildet ist, welche Gummibänder oder metallische Zugfedern sind.

3. Kabel-Klammer nach Anspruch 1, **dadurch gekennzeichnet, dass** seine Klemm-Schenkel (3, 4) aus Blech hergestellt sind und das Zugband von zwei Zugbändern (5, 6) gebildet ist, welche Gummibänder oder metallische Zugfedern sind.

4. Kabel-Klammer nach einem der vorangehenden Ansprüche, **dadurch gekennzeichnet, dass** der eine Klammerschenkel (3) breiter ausgeführt ist als der andere Klammerschenkel (4), und auf seiner Innenseite im seinem vorderen Endbereich eine kanalförmige Vertiefung (15) aufweist, in welcher der schmalere Klammerschenkel (4) beim Zusammenschwenken geführt ist.

5. Kabel-Klammer nach einem der vorangehenden Ansprüche, **dadurch gekennzeichnet, dass** der eine Klammerschenkel (3) breiter ausgeführt ist als der andere Klammerschenkel (4) und er über seine Länge gesehen in seinem mittleren Abschnitt eine Ausnehmung (14) bildet, durch welche der schmalere Klammerschenkel (4) mit seiner Breite durchschwenkbar ist.

6. Kabel-Klammer nach einem der vorangehenden Ansprüche, **dadurch gekennzeichnet, dass** die offene Kabel-Klammer einhändig bedienbar ist, indem der eine Klammerschenkel (3) in die gekrümmten Finger einer Hand gelegt wird und der andere, schmalere Klammerschenkel (4) mit dem Daumen über den Totpunkt um die eingelegten Kabel oder Objekte zuschwenkbar ist, und zum Öffnen der Kabel-Klammer der schmalere Klammerschenkel (4) mit dem Daumen der gleichen Hand am Griffbügel (9) über den Totpunkt aufschwenkbar ist.

7. Verwendung einer Kabel-Klammer nach einem der vorangehenden Ansprüche zum Bündeln und Zusammenklemmen von Ladekabeln, Netznabeln, Schnüren, Seilen, Schläuchen, Wollesträngen, Schweissdrähten, Drahtbündeln, Röhrchen oder Trinkhalmen.
